# EUROPÄISCHE PATENTSCHRIFT

(11) **EP 2 045 114 B1**
(45) Veröffentlichungstag und Bekanntmachung des Hinweises auf die Patenterteilung: **14.08.2013**
(21) Anmeldenummer: 08015745.6
(22) Anmeldetag: 06.09.2008
(51) Int. Cl.: B60K 35/00

(54) **Kraftfahrzeug mit verbessertem Warnsystem**
Motor vehicle with improved warning system
Véhicule automobile doté d'un système d'alerte amélioré

(30) Priorität: 04.10.2007 DE 102007047634
(43) Veröffentlichungstag der Anmeldung: 08.04.2009
(73) Patentinhaber: Volkswagen Aktiengesellschaft, 38440 Wolfsburg (DE)
(72) Erfinder: Wu, Yongmei Dr., 38108 Braunschweig (DE); Bohnenberger, Thorsten Dr., 38122 Braunschweig (DE); Lemke, Katja Dr., 38124 Braunschweig (DE)

(56) Entgegenhaltungen:
- WO-A-99/28145
- WO-A1-2007/090593
- DE-A1- 10 006 351
- DE-A1- 10 052 307
- US-A1- 2008 316 009

## Beschreibung

Die Erfindung betrifft ein Kraftfahrzeug mit einem Warnsystem nach dem Oberbegriff des Patentanspruchs 1 sowie ein Verfahren zum Vermitteln von Warninformationen nach dem Oberbegriff des Patentanspruchs 3.

Moderne Kraftfahrzeuge umfassen eine Vielzahl von Steuergeräten, die miteinander über einen Fahrzeugdatenbus informationstechnisch miteinander verknüpft sind und einzeln oder in Kombination Funktionen und Funktionalitäten im Kraftfahrzeug bereitstellen. Je mehr einzelne Funktionen auf unterschiedliche Steuergeräte verteilt werden, desto komplexer und für einen Nutzer undurchschaubarer wird das Gesamtsystem Kraftfahrzeug. Ein Nutzer eines Kraftfahrzeugs ist daher meist nicht in der Lage, sein Fahrzeug selbst auf einen ordnungsgemäßen Zustand zu überprüfen. Daher sind Steuergeräte in modernen Kraftfahrzeugen als so genannte selbstdiagnosefähige Steuergeräte ausgebildet, die sich hinsichtlich ihres einwandfreien Funktionszustandes selbst überprüfen. Einige Steuergeräte prüfen dabei indirekt oder direkt auch andere Steuergeräte, indem sie beispielsweise eine Übermittlung von benötigten Informationen auswerten und/oder hinsichtlich einer Plausibilität, ihres Eintreffens usw. überprüfen.

Ein Motorsteuergerät überwacht beispielsweise eine Temperatur und/oder einen Öldruck, der zum Schmieren der beweglichen Teile des Motors verwendet wird. Ein Lampensteuergerät überprüft die einzelnen Leuchtmittel des Kraftfahrzeugs und stellt einen Defekt eines Leuchtmittels fest. Zustände eines Fahrzeugsystems, die von einem vorgegebenen Normzustand abweichen, werden als Warnzustände bezeichnet. Stellt ein Steuergerät einen solchen Warnzustand fest, so erzeugt es ein Warnsignal. Solche Warnsignale werden bei Kraftfahrzeugen aus dem Stand der Technik verwendet, um in einem Kombiinstrument, in dem zumindest Informationen über einen Fahrzeugzustand, beispielsweise eine Fahrzeuggeschwindigkeit, eine Motordrehzahl, eine Aktivierung eines Nebelscheinwerfers usw., und auch Warnhinweise, beispielsweise in Form von hinterleuchteten Symbolen, angezeigt werden.

Aus der DE 100 06 351 A1 ist eine Vorrichtung zum Abrufen von Informationen zur Funktion und Bedienung verschiedener Einrichtungen eines Kraftfahrzeugs beschrieben, wobei das Kraftfahrzeug mit mindestens einem Fahrzeugbus ausgestaltet ist, an den verschiedene Komponenten der Fahrzeugelektronik angeschlossen sind. Die Vorrichtung umfasst eine Informationsbasis, in der Informationen zur Funktion und Bedienung verschiedener Einrichtungen des Kraftfahrzeugs abgespeichert sind, einen an die Informationsbasis angeschlossenen Mikrorechner, Eingabemittel zum Abrufen von Informationen von der Informationsbasis und Ausgabemittel zur Wiedergabe der abgerufenen Informationen. Für die beschriebene Vorrichtung ist ausgeführt, dass der Mikrorechner an den Fahrzeugdatenbus angeschlossen und so programmiert ist, dass der Informationsbedarf des Benutzers durch Auswertung der von den einzelnen Komponenten der Fahrzeugelektronik an den Fahrzeugbus gelieferten Daten ermittelt und entsprechende Informationen automatisch von der Informationsbasis abgerufen und wiedergegeben werden. Die beschriebene Vorrichtung ist zwar in der Lage, Erklärungsinformationen, die einen Warnhinweis erläutern und gegebenenfalls sogar Informationen umfassen, welche Maßnahmen zu ergreifen sind, um einen entsprechenden Warnzustand zu beseitigen, auszugeben, jedoch werden diese Informationen immer automatisch ausgegeben, auch dann, wenn der Nutzer beispielsweise keine erläuternden Informationen wünscht und diese als störend empfindet.

Ein Kraftfahrzeug mit den Merkmalen des Oberbegriffs der Ansprüche 1 und 3 ist bekannt aus US 2008/0316009 A1.

Der Erfindung liegt somit die Aufgabe zugrunde, ein Warnsystem für ein Kraftfahrzeug, ein Verfahren zur verbesserten Vermittlung von Warninformationen sowie eine Anzeige- und Bedienvorrichtung für eine bessere Informationsvermittlung in einem Kraftfahrzeug zu schaffen, die einen Informationsbedarf eines Nutzers möglichst umfassend befriedigt.

Das technische Problem wird erfindungsgemäß durch ein Kraftfahrzeug mit den Merkmalen des Patentanspruchs 1 und ein Verfahren mit den Merkmalen des Patentanspruchs 3.

Hierfür ist vorgesehen, dass auf einer Anzeigeeinrichtung, zusätzlich zu einem optisch und/oder akustisch ausgegebenen Warnhinweis eine Erklärungsinformation zu dem Warnhinweis multimodal ausgegeben wird. Dazu ist mit der Steuereinrichtung, die ein optisches und/oder akustisches Ausgeben des Warnhinweises steuert, ein Speicher verknüpft, in dem Erklärungsinformationen zu den einzelnen Warnhinweisen abgelegt sind. Die Ausgabe der Erklärungsinformation kann automatisch mit der Ausgabe des Warnhinweises oder durch Abruf der Erklärungsinformation bei Ausgabe des Warnhinweises erfolgen. Durch letzteres wird erreicht, dass nur dann Erklärungsinformationen ausgegeben werden, wenn der Nutzer dies wünscht. Der Abruf kann beispielsweise über Bedienelemente, mit dem ein grafischer Zeiger bewegt werden kann oder der optisch ausgegebene Hinweis auf der Anzeigefläche markiert werden kann und anschließend über eine "Eingabe"-Bedienhandlung aktiviert werden kann, oder Touch-Screen-Bedienelemente erfolgen. Wird der Warnhinweis optisch benachbart zu einem Bedienelement so ausgegeben, wie ansonsten Funktionszuordnungen zu solchen Bedienelementen ausgegeben werden, so kann eine mit der optischen Ausgabe verknüpfte Erklärungsaktivierungshandlung über ein Betätigen dieses Bedienelements erfasst werden. Insbesondere wird ein Kraftfahrzeug mit einem verbesserten Warnsystem vorgeschlagen, welches eine Anzeigeeinrichtung zum Anzeigen zumindest von Fahrzeugzustandsinformationen, selbstdiagnosefähige Steuergeräte, einen Fahrzeugdatenbus, über den das Kombiinstrument und die Steuergeräte informationstechnisch miteinander verbunden sind, umfasst, wobei die Steuergeräte ausgebildet sind, für bei der Selbstdiagnose erkannte Warnzustände entsprechende Warnsignale über den Fahrzeugdatenbus zu übermitteln, und die Anzeigeeinrichtung ausgebildet ist, die Warnsignale auszuwerten und entsprechende Warnhinweise optisch und/oder akustisch auf der Anzeigeeinrichtung anzuzeigen, wobei die Anzeigeeinrichtung weiterhin derart ausgebildet ist, dass gleichzeitig oder durch manuelle Anforderung mit der Ausgabe des Warnhinweises. Erklärungsinformationen zu dem Warnhinweis abrufbar und/oder auf der Anzeigeeinrichtung ausgebbar sind.

Nach einer Ausbildung der Erfindung weist die Anzeigeeinrichtung ein Kombiinstrument, auf welchen den Warnsignalen entsprechende Warnhinweise ausgebbar sind und/oder ausgegeben werden, und eine räumlich vom Kombiinstrument getrennte Anzeige- und Bedieneinrichtung, durch welche optisch und/oder akustisch Erklärungsinformationen zu den Warnhinweisen ausgebbar sind und/oder ausgegeben werden, auf.
Die Anzeige- und Bedienvorrichtung weist vorzugsweise für eine verbesserte Informationsvermittlung bei in einem Kraftfahrzeug auftretenden Warnzuständen , die über entsprechende den Warnzuständen zugeordnete Warnsignale signalisiert werden, eine Anzeigefläche, eine Datenbusschnittstelle zum Empfangen der Warnsignale, eine Steuereinrichtung zum Auswerten der Warnsignale und Steuern einer optischen Ausgabe von entsprechenden Warnhinweisen auf der Anzeigefläche auf, wobei mit der Steuereinrichtung mindestens ein Bedienelement zum Erfassen einer mit der optischen Ausgabe verknüpften Erklärungsaktivierungshandlung des Nutzers verknüpft ist und die Steuereinrichtung mit einem Speicher verknüpft ist, in dem Erklärungsinformationen zu den Warnzuständen abgelegt sind, wobei die Steuereinrichtung ausgebildet ist, nur dann, wenn eine mit der optischen Ausgabe des Warnhinweises auf der Anzeigefläche verknüpfte Erklärungsaktivierungshandlung erfasst ist, dem Warnhinweis zugeordnete Erklärungsinformationen aus dem Speicher abzurufen und an den Nutzer auszugeben.

Ein Verfahren zum Vermitteln der Warninformationen an einen Nutzer in einem Kraftfahrzeug umfasst somit die Schritte: Ausführen von Selbstdiagnosen in den Steuergeräten des Kraftfahrzeugs und Erzeugen von Warnsignalen bei Erkennen von Warnzuständen, Übermitteln der Warnsignale an eine Anzeigeeinrichtung, optisches Anzeigen der Warnhinweise durch die Anzeigeeinrichtung und gleichzeitig mit der Ausgabe des Warnhinweises oder durch manuelle Anforderung Ausgeben von Erklärungsinformationen auf der Anzeigeeinrichtung. Dem Nutzer werden jederzeit erläuternde Informationen zu den Warnhinweisen angeboten. Erfolgt die Anzeige der Erklärungsinformationen durch manuelle Anforderung wird der Nutzer nicht automatisch mit Informationen eingedeckt, die er gegebenenfalls aufgrund seiner Konzentration auf den Straßenverkehr gar nicht aufnehmen kann oder nicht benötigt, da er den Warnhinweis aufgrund seiner Kenntnisse und Erfahrungen einzuordnen weiß. Der Nutzer kann sich zu einem Zeitpunkt, an dem er aufnahmebereit ist, die Erklärungsinformationen ausgeben lassen. Wünscht er keine Erklärungsinformationen so unterbleibt eine Ausgabe vollständig. Hierdurch wird erreicht, dass ein Fahrer in kritischen Situationen, in denen ihm beispielsweise ein Ausfall einer Servounterstützung der Lenkung über einen Warnhinweis signalisiert wird, sich voll auf das Lenken des Kraftfahrzeugs konzentrieren und das Fahrzeug zum Stillstand bringen, bevor er sich die Erklärungsinformationen ausgeben lässt. Eine Steigerung des Stresses für den Fahrer beim Auftreten eines Warnhinweises wird hierdurch reduziert, was insgesamt eine Fahrsicherheit erhöht.

Nach einer vorteilhaften Ausführung der Erfindung erfolgt die Ausgabe der Warnhinweise durch das Kombiinstrument des Fahrzeuges und die Erklärungshinweise durch eine räumlich getrennt vom Kombiinstrument angeordnete Anzeige- und Bedieneinrichtung.

Bei einer besonders bevorzugten Ausführungsform der Erfindung ist die genutzte Anzeige- und Bedienvorrichtung eine Multifunktibnsanzeige- und Bedienvorrichtung. Dies bedeutet, dass die Anzeige- und Bedienvorrichtung, die die Erklärungsinformationen ausgibt, nicht nur zum Ausgeben der Erklärungsinformationen vorgesehen ist, sondern vielmehr zum Vermitteln von Informationen und/oder Bedienen einer Vielzahl von Funktionen und/oder Fahrzeugsystemen vorgesehen ist.

Besonders bevorzugt ist die die Anzeige- und Bedienvorrichtung ein Audio- und/oder Video-und/oder Navigationssystem. Verallgemeinert ausgedrückt ist die Anzeige- und Bedienvorrichtung vorzugsweise ein Infotainment- und/oder Navigationssystem. In ein solches System sind vorzugsweise ein Autoradio, ein CD-Player, ein MP3-Player und/oder ein DVD-Player sowie gegebenenfalls ein Kraftfahrzeugnavigationssystem zum Ausführen einer zielgeführten Navigation integriert. Solche Systeme sind in Kraftfahrzeugen heute bereits serienmäßig häufig vorhanden, so dass ein solches System leicht um die zusätzliche Funktionalität zum Erklären von Warnhinweisen auf eine Erklärungsaktivierungshandlung hin erweitert werden kann.

Besonders bevorzugt werden Ausführungsformen, in denen die Anzeige- und Bedienvorrichtung eine Multifunktionsanzeige- und Bedienvorrichtung ist, über die zusätzlich neben den integrierten Systemen und Funktionen auch andere Fahrzeugsysteme, Fahrzeugfunktionen und/oder mit dem Fahrzeug gekoppelte Systeme, beispielsweise externe MP3-Player, Mobiltelefone usw., bedienbar sind. Dieses bietet den Vorteil, dass für das Ausgeben der Erklärungsinformationen keine zusätzliche Hardware benötigt wird, das Multifunktionsanzeige und Bedienvorrichtungen, die Infotainment- und/oder Navigationssystem umfassen heute in fast allen Kraftfahrzeugen verbaut sind.

Um eine mit der optischen Ausgabe verknüpfte Nutzerhandlung auf einfache Weise erfassen zu können, sieht eine bevorzugte Ausführungsform vor, dass die Anzeige- und Bedienvorrichtung einen Touchscreen als Anzeigeeinheit und als das mindestens eine Bedienelement umfasst. Eine mit der optischen Ausgabe verknüpfte Erklärungsaktivierungshandlung kann bei einem Touchscreen dadurch erfasst werden, dass eine ermittelte Berührposition mit einer Darstellungsposition des Warnhinweises auf der Anzeigefläche korreliert wird. Stimmen diese innerhalb vorgegebener Grenzen überein, so wird die Berührhandlung als Erklärungsaktivierungshandlung interpretiert und behandelt.

Da Warnzustände häufig während der Fahrt auftreten und somit entsprechend die Warnhinweise im Kombiinstrument und auf der hiervon getrennt ausgebildeten Anzeigefläche angezeigt werden, ist es für den Nutzer häufig wünschenswert, wenn die Erklärungsinformationen akustisch ausgegeben werden, da ein visuelles Wahrnehmen der Erklärungsinformationen zu einer Blickabwendung vom Verkehrsgeschehen führt, was unerwünscht ist. Bei einer bevorzugten Ausführungsform der Erfindung ist daher vorgesehen, dass die Anzeige- und Bedienvorrichtung ausgebildet ist, eine Audioausgabe zu steuern und die Erklärungsinformationen zumindest zum Teil akustisch auszugeben.

Da nicht alle zu vermittelnden Informationen auf einfache Weise akustisch zu vermitteln sind, ist es vorgesehen, die Erklärungsinformationen multimodal auszugeben. Unter einem multimodalen Ausgeben wird ein Ausgeben der Erklärungsinformationen über unterschiedliche Ausgabemittel verstanden. Diese können optische, haptische, akustische Ausgabemittel umfassen, von denen mindestens zwei gemeinsam, miteinander abgestimmt genutzt werden.

Da Nutzer daran gewöhnt sind, sich Informationen von Menschen erklären zu lassen, können Informationen besonders leicht erfasst werden, wenn bei der Informationsvermittlung eine animierte künstliche Person als "erklärende Person" verwendet wird. Das Ausgeben der Erklärungsinformationen umfasst somit ein Ausgeben einer animierten künstlichen Person.

Die gleichzeitige Übermittlung der Warnsignale von den Steuergeräten sowohl an das Kombiinstrument als auch an die Anzeige- und Bedienvorrichtung erfolgt vorteilhafterweise auf die Art, dass die Warnsignale als Broadcastnachrichten in einem Kommunikationsprotokoll des Fahrzeugdatenbusses übermittelt werden. Hierdurch ist nur eine einmalige Übermittlung des Warnsignals über den Fahrzeugdatenbus notwendig. Dies führt gegenüber einer gezielten Übermittlung der Informationen an die Anzeigeeinrichtung zu einer Reduzierung der benötigten Bandbreite zur Übertragung der Warnsignale.

Nachfolgend wird die Erfindung anhand eines bevorzugten Ausführungsbeispiels unter Bezugnahme auf eine Zeichnung näher erläutert. Hierbei zeigt:

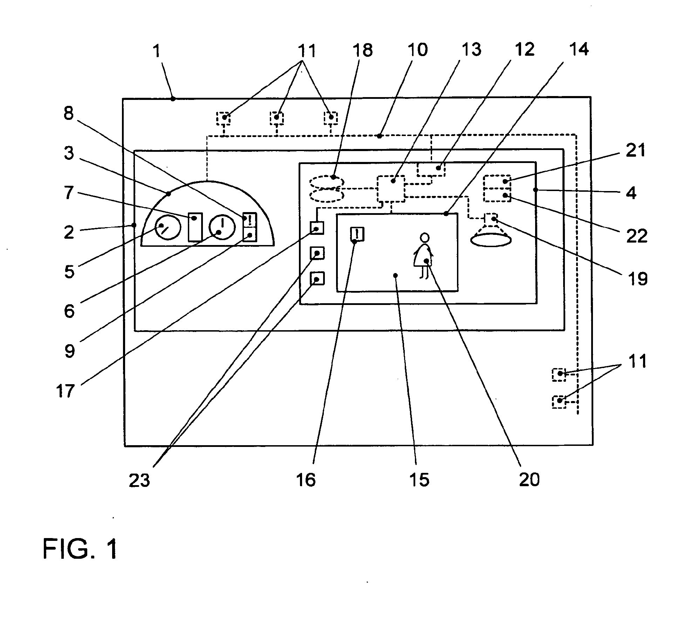

- Fig. 1: eine schematische Ansicht eines Kraftfahrzeugs mit einem verbesserten Warnsystem.

In Fig. 1 ist schematisch ein Kraftfahrzeug 1 dargestellt. Das Kraftfahrzeug umfasst ein Armaturenbrett 2, in dem ein Kombiinstrument 3 und hiervon getrennt ausgebildete als Multifunktionsanzeige- und Bedienvorrichtung 4 ausgebildete Anzeige- und Bedienvorrichtung angeordnet sind. Das Kombiinstrument 3 umfasst beispielsweise mehrere Zeigerinstrumente 5, 6, die eine Geschwindigkeit des Kraftfahrzeugs 1 und eine Drehzahl eines Motors anzeigen. Zusätzlich umfasst das Kombiinstrument 3 eine freiprogrammierbare Anzeigefläche 7, auf der beispielsweise ein Kilometerstand, ein aktueller Kraftstoffverbrauch usw. angezeigt werden können. Zusätzlich umfasst das Kombiinstrument mit Leuchtmitteln hinterlegte Warnsymbole 8, 9. Die einzelnen in dem Kombiinstrument 3 zusammengefassten Anzeigeelemente können mechanische Zeigerinstrumente, digital nachgebildete Zeigerinstrumente, grafische Symbole, hinterleuchtete Symbole, Lampen, LCD-Displays, LED-Displays usw. umfassen. Auch das Kombiinstrument 3 und die Multifunktionsanzeige- und Bedienvorrichtung 4 sind Steuergeräte.

Das Kombiinstrument 3 ist mit einem Fahrzeugdatenbus 10 verbunden, über den von Steuergeräten 11 die notwendigen Informationen geliefert werden, die in dem Kombiinstrument 3 angezeigt werden. Bei einigen Ausführungsformen ist vorgesehen, dass dem Kombiinstrument zusätzlich über spezielle Signalleitungen einzelne Signale zugeführt werden, beispielsweise ein Geschwindigkeitssignal.

Die in Fig. 1 gestrichelt dargestellten Elemente sind für den Nutzer des Kraftfahrzeugs nicht sichtbar und verborgen im Kraftfahrzeug angeordnet. Die Steuergeräte 11 sind so ausgebildet, dass sie selbständige Diagnosen durchführen, um Warnzustände feststellen zu können, die eine Abweichung von einem Normverhalten eines Fahrzeugsystems oder eines Fahrzeugzustands anzeigen. Beim Erkennen eines Warnzustands wird von dem entsprechenden Steuergerät 11 ein Warnsignal als Broadcastnachricht über den Fahrzeugdatenbus 10, der vorzugsweise als serieller Datenbus, beispielsweise nach dem CAN-Standard oder dem Flexray-Standard ausgestaltet ist, übermittelt. Das Kombiinstrument 3, welches selbst ein Steuergerät mit einer Steuereinheit (nicht dargestellt) ist, wertet diese Warnsignale aus und gibt optisch an einen Nutzer einen Warnhinweis aus. Im dargestellten Beispiel wird das Warnsymbol, welches mit dem Bezugszeichen 8 versehen ist, aktiv hinterleuchtet und ist somit für den Nutzer sichtbar.

Mit dem Fahrzeugdatenbus 10 ist ferner eine Schnittstelle 12 der Multifunktionsanzeige- und Bedienvorrichtung 4 informationstechnisch verknüpft. Die Schnittstelle 12 ist mit einer Steuereinrichtung 13 gekoppelt, die die als Broadcastnachrichten versandten und von der Schnittstelle 12 empfangenen Warnsignale empfängt und auswertet. Die Steuereinrichtung 13 steuert daraufhin eine Anzeigeeinheit 14 an, die vorzugsweise als Touchscreen ausgebildet ist, um auf einer Anzeigefläche 15 ebenfalls optisch einen Warnhinweis, beispielsweise in Form eines grafischen Symbols 16 auszugeben. Im dargestellten Ausführungsbeispiel gleichen sich die optisch ausgegebenen Warnhinweise hinsichtlich ihrer Erscheinungsform. Dieses muss jedoch nicht sein. Das grafische Symbol 16 ist benachbart zu einem als Taster ausgebildeten Bedienelement 17 dargestellt, um anzudeuten, dass eine Betätigung dieses Bedienelements 17 als eine Erklärungsaktivierung auslöst. Da die Anzeigeeinheit 14 als Touchscreen ausgebildet ist, wird als mit der optischen Ausgabe verknüpfte Erklärungsaktivierungshandlung auch eine Berührung der Anzeigefläche 15 im Darstellungsbereich des Warnsymbols 16 aufgefasst. Dies bedeutet, dass die Steuereinrichtung 13 das Bedienelement 17 bzw. den in die Anzeigeeinheit 15 integrierten berührungsempfindlichen Sensor auswertet und dessen Berührungsposition mit der Darstellungsposition des grafischen Symbols 16 korreliert, um eine durch den Nutzer vorgenommene Erklärungsaktivierungshandlung zu erfassen. Wird eine solche Erklärungsaktivierungshandlung erfasst, beispielsweise indem der Nutzer die Anzeigefläche 15 im Darstellungsbereich des grafischen Symbols 16 berührt, so ruft die Steuereinrichtung 13 aus einem Speicher 18 Erklärungsinformationen ab und gibt diese multimodal, d.h. sowohl grafisch über die Anzeigeeinheit 14 als auch akustisch über einen Audioausgabesystem, welches mittels eines Lautsprechers 19 schematisch dargestellt ist, aus. Die grafische Ausgabe erfolgt so, dass eine animierte künstliche Person (Avatar) 20 dargestellt wird, die erklärende Informationen zu dem Warnhinweis ausgibt. Hierbei können auf der Anzeigefläche 15 auch einzelne Videosequenzen dargestellt werden, die Hinweise dazu geben, wie der Warnzustand des Fahrzeugsystems wieder beseitigt werden kann. Die Multifunktionsanzeige- und Bedienvorrichtung 4 umfasst vorzugsweise weitere Funktionseinheiten 21, 22, die beispielsweise als Autoradio, Fahrzeugnavigationssystem, CD-/DVD-Player oder MP3-Player usw. ausgebildet sein können. Ferner sind für eine Bedienung weitere Bedienelemente 23 ähnlich zu dem mit dem Bezugszeichen 17 gekennzeichneten Bedienelement vorgesehen.

Das beschriebene Beispiel ist lediglich beispielhaft zu verstehen. Es ergibt sich für den Fachmann, dass eine Vielzahl von unterschiedlichen Variationen und Ausgestaltungen der Erfindung möglich sind. Wesentlich ist jedoch, dass eine akustische und/oder grafische Ausgabe von umfassenden Erklärungsinformationen erst nach einer Aktivierung durch den Nutzer erfolgt.

### Bezugszeichenliste

- 1: Kraftfahrzeug
- 2: Armaturenbrett
- 3: Kombiinstrument
- 4: Multifunktionsanzeige- und Bedienvorrichtung
- 5, 6: Zeigerinstrumente
- 7: freiprogrammierbare Anzeigefläche
- 8, 9: Warnsymbole
- 10: Fahrzeugdatenbus
- 11: Steuergeräte
- 12: Schnittstelle
- 13: Steuereinrichtung
- 14: Anzeigeeinheit
- 15: Anzeigefläche
- 16: grafisches Symbol
- 17: Bedienelement
- 18: Speicher
- 19: Lautsprecher
- 20: künstliche Person
- 21,22: Funktionskomponenten
- 23: Bedienelemente

## Patentansprüche

1. Kraftfahrzeug (1) mit Warnsystem, umfassend: eine Anzeigeeinrichtung (3) zum Anzeigen zumindest von Fahrzeugzustandsinformationen, selbstdiagnosefähige Steuergeräte (11), einen Fahrzeugdatenbus (10), über den die Anzeigeeinrichtung (3, 14) und die Steuergeräte (11) informationstechnisch miteinander verbunden sind, wobei die Steuergeräte (11) ausgebildet sind, für bei der Selbstdiagnose erkannte Warnzustände entsprechende Warnsignale über den Fahrzeugdatenbus (10) zu übermitteln, und die Anzeigeeinrichtung (3) ausgebildet ist, die Warnsignale auszuwerten und entsprechende Wamhinweise optisch und/oder akustisch durch die Anzeigeeinrichtung (3, 14) anzuzeigen, wobei die Anzeigeeinrichtung (3, 14) derart ausgebildet ist, dass gleichzeitig oder durch manuelle Anforderung mit der optischen Ausgabe des Warnhinweises Erklärungsinformationen zu dem Warnhinweis aus einem Speicher (18) abrufbar sind und/oder abgerufen werden und durch die Anzeigeeinrichtung (3,14) ausgebbar sind und/oder ausgegeben werden, **dadurch gekennzeichnet, dass** die Anzeigeeinrichtung (3, 14) ausgebildet ist, die Erklärungsinformationen multimodal auszugeben und wobei das Ausgeben der Erklärungsinformationen ein Ausgeben einer animierten künstlichen Person (20) umfasst.

2. Kraftfahrzeug (1) nach Anspruch 1, **dadurch gekennzeichnet, dass** die Anzeigeeinrichtung (3, 14) ein Kombünstrument (3), auf welchen den Warnsignalen entsprechende Warnhinweise ausgebbar sind und/oder ausgegeben werden, und eine räumlich vom Kombünstrument (3) getrennte Anzeige- und Bedieneinrichtung (14), durch welche optisch und/oder akustisch Erklärungsinformationen zu den Warnhinweisen ausgebbar sind und/oder ausgegeben werden, aufweist.

3. Verfahren zum Vermitteln von Warninformationen an einen Nutzer in einem Kraftfahrzeug (1), umfassend die Schritte: Ausführen von Selbstdiagnosen in Steuergeräten (11) des Kraftfahrzeugs (1) und Erzeugern von Warnsignalen bei Erkennen von Warnzuständen, Übermitteln der Warnsignale an eine Anzeigeeinrichtung (3, 14), optisches und/oder akustisches Anzeigen eines Warnhinweises durch die Anzeigeeinrichtung (3, 14) wobei gleichzeitig oder durch manuelle Anforderung mit der optischen Ausgabe des Warnhinweises Erklärungsinformationen zu dem Wamhinweis auf der Anzeigeeinrichtung ausgegeben werden, **dadurch gekennzeichnet, dass** die Erklärungsinformationen multimodal ausgegeben werden und das Ausgeben der Erklärungsinformationen ein Ausgeben einer animierten künstlichen Person (20) umfasst.

4. Verfahren nach Anspruch 3, **dadurch gekennzeichnet, dass** die Anzeigeeinrichtung (3,14) eine Audioausgabe steuert und die Erklärungsinformationen zumindest zum Teil akustisch ausgegeben werden.

5. Verfahren nach einem der Ansprüche 3 oder 4, **dadurch gekennzeichnet, dass** die den Warnsignalen entsprechenden optischen Warnhinweise auf einem Kombiinstrument des Fahrzeuges und die optischen und/oder akustischen Erklärungsinformationen zu den Wamhinweisen auf einer räumlich vom Kombiinstrument getrennt angeordneten Anzeige- und Bedieneinrichtung ausgegeben werden.

6. Verfahren nach einem der Ansprüche 3 bis 5, **dadurch gekennzeichnet, dass** die Erklärungsinformationen während und/oder eine definierte Zeitdauer nach der Ausgabe der optischen und/oder akustischen Wamhinweise aufrufbar sind.

## Claims

1. Motor vehicle (1) having a warning system, comprising: an indicator device (3) for indicating at least vehicle state information, controllers (11) with self-diagnosis capability, a vehicle data bus (10) by means of which the indicator device (3, 14) and the controller (11) are connected to one another for the purpose of information interchange, wherein the controllers (11) are designed to transmit appropriate warning signals via the vehicle data bus (10) for warning states that are identified during the self-diagnosis, and the, indicator device (3) is designed to evaluate the warning signals and to indicate corresponding warnings in visual and/or audible form, wherein the indicator device (3, 14) is designed such that explanatory information concerning the warning can be retrieved and/or is retrieved from a memory (18), and can be output and/or is output by the indicator device (3, 14), simultaneously or by means of manual request with the visual output of the warning, **characterized in that** the indicator device (3, 14) is designed to output the explanatory information in multimodal form and wherein the output of the explanatory information comprises output of an animated artificial person (20).

2. Motor vehicle (1) according to Claim 1, **characterized in that** the indicator device (3, 14) has a combined instrument (3), which can be used to output and/or is used to output warnings corresponding to the warning signals, and an indicator and operator control device (14), which is physically separate from the combined instrument (3) and which can output and/or which outputs explanatory information concerning the warnings in visual and/or audible form.

3. Method for conveying warning information to a user in a motor vehicle (1), comprising the following steps: execution of self-diagnoses in controllers (11) of the motor vehicle (1) and production of warning signals when warning states are identified, transmission of the warning signals to an indicator device (3, 14), visual and/or audible indication of a warning by the indicator device (3, 14), wherein explanatory information concerning the warning is output on the indicator device simultaneously or by means of manual request with the visual output of the warning, **characterized in that** the explanatory information is output in multimodal form and the output of the explanatory information comprises output of an animated artificial person (20).

4. Method according to Claim 3, **characterized in that** the indicator device (3, 14) controls an audio output and at least some of the explanatory information is output in audible form.

5. Method according to either of Claims 3 and 4, **characterized in that** the visual warnings corresponding to the warning signals are output on a combined instrument in the vehicle and the visual and/or audible explanatory information concerning the warnings is output on an indicator and operator control device in a physically separate arrangement from the combined instrument.

6. Method according to one of Claims 3 to 5, **characterized in that** the explanatory information can be called up during and/or a defined period of time after the output of the visual and/or audible warnings.

## Revendications

1. Véhicule automobile (1) doté d'un système d'alerte, comprenant : un dispositif d'affichage (3) permettant d'afficher au moins des informations d'état du véhicule, des appareils de commande (11) capables d'autodiagnostic, un bus de données de véhicule (10) via lequel le dispositif d'affichage (3, 14) et les appareils de commande (11) sont reliés entre eux sur le plan de la technique d'échange d'informations, les appareils de commande (11) étant conçus pour transmettre des signaux d'alerte correspondants aux états d'alerte détectés lors de l'autodiagnostic via le bus de données de véhicule (10) et le dispositif d'affichage (3) étant conçu pour analyser les signaux d'alerte et pour afficher les messages d'alerte correspondants optiquement et/ou acoustiquement par le biais du dispositif d'affichage (3, 14), le dispositif d'affichage (3, 14) étant réalisé de telle sorte que des informations explicatives correspondant au message d'alerte peuvent être appelées et/ou sont appelées de la mémoire (18) simultanément ou par demande manuelle lors de l'affichage optique du message d'alerte, et peuvent être affichées et/ou sont affichées par le dispositif d'affichage (3, 14), **caractérisé en ce que** le dispositif d'affichage (3, 14) est réalisé pour afficher les informations explicatives de façon multimodale et l'affichage des informations explicatives comprenant l'affichage d'une personne (20) artificielle animée.

2. Véhicule automobile (1) selon la revendication 1, **caractérisé en ce que** le dispositif d'affichage (3, 14) comprend un instrument de tableau de bord (3) sur lequel les messages d'alerte correspondant aux signaux d'alerte peuvent être affichés et/ou sont affichés ainsi qu'un dispositif d'affichage et de commande (14) placé à une certaine distance dans l'espace de l'instrument de tableau de bord (3) à travers lequel les informations explicatives correspondant aux messages d'alerte peuvent être affichées et/ou sont affichées optiquement et/ou acoustiquement.

3. Procédé de communication d'informations d'alerte à un utilisateur placé dans un véhicule automobile (1), comprenant les étapes suivantes : réalisation d'autodiagnostics dans des appareils de commande (11) du véhicule automobile (1) et émission de signaux d'alerte en cas de détection d'états d'alerte, transmission des signaux d'alerte à un dispositif d'affichage (3, 14), affichage optique et/ou acoustique d'un message d'alerte par le biais du dispositif d'affichage (3, 14), des informations explicatives correspondant au message d'alerte étant affichées sur le dispositif d'affichage, simultanément ou par demande manuelle, lors de l'affichage optique du message d'alerte, **caractérisé en ce que** les informations explicatives sont affichées de façon multimodale et que l'affichage des informations explicatives comprend l'affichage d'une personne (20) artificielle animée.

4. Procédé selon la revendication 3, **caractérisé en ce que** le dispositif d'affichage (3, 14) commande une transmission audio et que les informations explicatives sont transmises au moins en partie acoustiquement.

5. Procédé selon l'une quelconque des revendications 3 ou 4, **caractérisé en ce que** les messages d'alerte optiques correspondant aux signaux d'alerte sont affichés sur un instrument de tableau de bord du véhicule et que les informations explicatives optiques et/ou acoustiques correspondant aux messages d'alerte sont affichées sur un dispositif d'affichage et de commande disposé à une certaine distance dans l'espace de l'instrument de tableau de bord.

6. Procédé selon l'une quelconque des revendications 3 à 5, **caractérisé en ce que** les informations explicatives peuvent être appelées pendant une durée définie et/ou après l'affichage des messages d'alerte optiques et/ou acoustiques.
